# EUROPEAN PATENT APPLICATION

(11) **EP 1 671 985 A1**
(43) Date of publication of application: **21.06.2006**
(21) Application number: 04773424.9
(22) Date of filing: 17.09.2004
(51) Int. Cl.: C08F 292/00, C08F 4/70

(54) **POLYOLEFIN GRAFT COPOLYMER**

(30) Priority: 06.10.2003 JP 2003346503; 12.12.2003 JP 2003414733; 11.03.2004 JP 2004068485
(71) Applicant: KANEKA CORPORATION, Osaka-shi, Osaka 530-8288 (JP)
(72) Inventor: FUKUI, Yoshifumi, 5600085 (JP); SAKAMOTO, Harumi, 5660073 (JP)
(74) Representative: Vossius & Partner
(86) International application number: PCT/JP2004/014045
(87) International publication number: WO 2005/033159

(57) **Abstract**

The present invention provides a polyolefin copolymer in which an olefin monomer is graft-copolymerized to modified particles of a metallic compound. The polyolefin graft copolymer can be obtained by graft-copolymerizing the olefin monomer to modified particles of a metallic compound in the presence of a coordination polymerization catalyst in the presence of, particularly, a coordination polymerization catalyst of a late transition metal complex. Further, the property of a polyolefin resin can be improved by blending the polyolefin graft copolymer to a polyolefin resin.

## Description

### TECHNICAL FIELD

The present invention relates to a novel polyolefin graft copolymer, in which an olefin monomer is graft-copolymerized to modified particles of a metallic compound in the presence of a coordination polymerization catalyst, particularly, in the presence of a coordination polymerization catalyst of a late transition metal complex, and the composition thereof, and the process for preparing the same.

### BACKGROUND ART

Particles of a metallic compound are used for improving properties of various polymers such as rigidity, heat resistance, dimentional stability, impact resistance, flame retardancy, dehydrating property, dehumidifying property, radiation protecting property, ultraviolet rays protecting property, heat wave radiating property, light scattering and reflection property, electromagnetic wave absorbability, piezoelectricity, thermal conductivity, electric conductivity, magnetism, heat insulation and light weight property, sliding property, damping property, and other functionalities. However, in some cases, such metallic compound particles and polymers show poor compatibility, and in such cases, it is effective to use a process in which polymer components intended to be improved are grafted to the metallic compound particles. Particularly in the case of particles of a metallic compound which are easily dispersed in water, a process of grafting by utilizing emulsion polymerization is the most suitable. For example, it is disclosed that a core-shell article can be synthesized by graft-copolymerizing a vinyl monomer to colloidal silica (JP-A-9-194208). It is also disclosed that properties of a thermoplastic resin such as the abration resistance, weather resistance, and impact resistance can be improved by graft-copolymerizing a vinyl monomer to a core-shell article of colloidal silica and silicone, then, adding the resultant copolymer to the thermoplastic resin (JP-A-4-270710). Further, a three-layer core-shell article of an inorganic particle/ inorganic compound/ organic polymer such as a three-layer core-shell article of calcium carboizate/calcium phosphate/(meth)acrylic ester polymer is synthesized, and properties of a thermoplastic resin such as strength, elastic modulus, impact strength, blocking resistance and scratch resistance are improved (JP-A-2001-98164).

However, since compatibility of a grafted vinyl polymer and that of a polyolefin resin are generally different, there are problems such as lowering tensile elongation caused by the low compatibility when the grafted vinyl polymer is blended in a polyolefin resin,

On the other hand, studies of preparing a composite of clay, clay mineral or an ion exchangeable layer compound (hereinafter, referred to as a clay compound) with a polyolefin by a melt-kneading process or a polymerization process are actively conducted.

In general, an organificated clay compound (modified compound) is used as the clay compound, thereafter, subject to melt-kneading with a polyolefin or olefin polymerization to obtain a complex. However, since compatibility between the organificated clay and the polyolefin is not necessarily sufficient, trials for improving the compatibility by grafting of an organic portion in the organificated clay with the polyolefin are performed (JP-A-2000-136308).

Grafting a clay compound is attained by a melt-kneading process, however, there has been no example of grafting by a polymerization process so far.

Further, since general coordination polymerization catalysts (an early transition metal complex) have a property of deactivating in water, it is generally difficult to graft-copolymerize an olefin monomer to an aqueous dispersed particles of a metallic compound.

### DISCLOSURE OF INVENTION

An object of the present invention is to provide a polyolefin copolymer in which an olefin monomer is graft-copolymerized to modified particles of a metallic compound, in particular, to provide a polyolefin copolymer in which an olefin monomer is graft-copolymerized to modified particles of a metallic compound in the state of being dispersed in water.

As a result that the inventors of the present invention intensively studied in order to achieve the above object, the present invention was completed.

Namely, the present invention relates to a polyolefin graft copolymer, wherein an olefin monomer is graft-copolymerized to modified particles of a metallic compound in the presence of a coordination polymerization catalyst.

It relates to the polyolefin graft copolymer, wherein the coordination polymerization catalyst is a coordination polymerization catalyst of a late transition metal complex, as a preferable embodiment.

It relates to the polyolefin graft copolymer, wherein the coordination polymerization catalyst of a late transition metal complex is a complex comprising a ligand having 2 imine nitrogens and a transition metal selected from the VIII to X group of elements in the periodic table; as a preferable embodiment.

It relates to the polyolefin graft copolymer, wherein the coordination polymerization catalyst of a late transition metal complex is a complex comprising an α-diimine ligand and a transition metal selected from the X group of elements in the periodic table, as a preferable embodiment.

It relates to the polyolefin graft copolymer, wherein the coordination polymerization catalyst of a late transition metal complex is an activated species represented by the following general formula (1) or general formula (2), 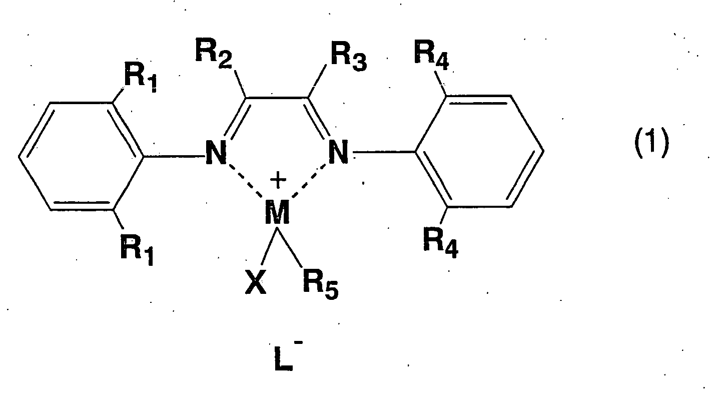 (wherein, M represents a palladium or nickel. Each of R₁ and R₄ independently represents a hydrocarbon group having 1 to 4 carbon atoms. R₂ and R₃ represent each independently a hydrogen atom or a methyl group. R₅ represents a halogen atom, hydrogen atom or organic group having 1 to 20 carbon atoms. X represents an organic group having a hetero atom coordinatable to M, and may be connected to R₅, or may not exist. L- represents anion), 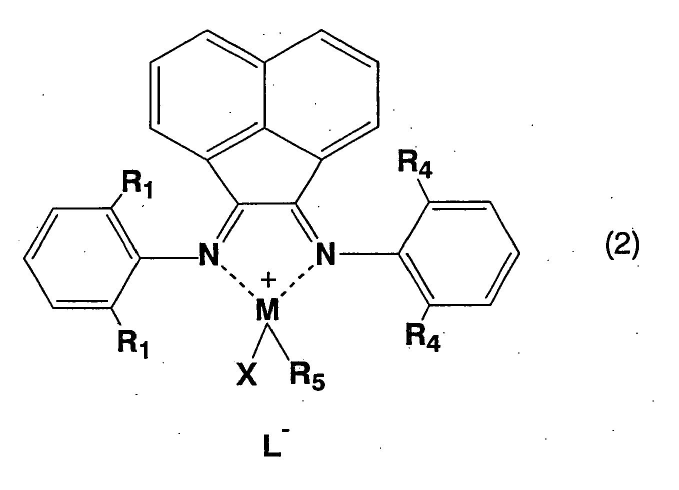 (wherein, M represents a palladium or nickel. Each of R₁ and R₄ independently represents a hydrocarbon group having 1 to 4 carbon atoms. R₅ represents a halogen atom, hydrogen atom, or an organic group having 1 to 20 carbon atoms. X represents an organic group having a hetero atom coordinatable to M, and may be connected to R₅, or may not exist. L- represents anion), after reacting with a co-catalyst, as a preferable embodiment.

It relates to a polyolefin graft copolymer, wherein the olefin monomer is an α-olefin having at most 10 carbon atoms, as a preferable embodiment.

It relates to the polyolefin graft copolymer, wherein the metallic compound comprises at least one metal selected from the group consisting of sodium, potassium, beryllium, magnesium, calcium, strontium, barium, titanium, molybdenum, iron, zinc, aluminum, gallium, silicon, tin, lead, and antimony, as a preferable embodiment.

It relates to the polyolefin graft copolymer, wherein the metallic compound is any one selected from an oxide, hydroxide, carbonate, sulfate, silicate, nitride, titanate, zirconate, borate, sulfide, carbide, and borate, as a preferable embodiment.

It relates to the polyolefin graft copolymer, wherein the metallic compound is magnesium hydroxide or silica, as a preferable embodiment.

It relates to the polyolefin graft copolymer, wherein the metallic compound is a clay compound, as a preferable embodiment.

It relates to the polyolefin graft copolymer, wherein modified particles of the metallic compound is modified particles obtained by reacting a metallic compound and a compound having a functional group, and said compound having a functional group is a compound having a functional group capable of reacting with a metallic compound in the state of being dispersed in water and a carbon-carbon double bond capable of coordination polymerization in one molecule, as a preferable embodiment.

It relates to a polyolefin resin composition comprising the polyolefin graft copolymer and a polyolefin resin.

It relates to a process for preparing the polyolefin graft copolymer.

The polyolefin graft copolymer of the present invention is excellent in dispersibility and compatibility in kneading with a polyolefin resin. Consequently, properties such as high tensile elongation, high tensile elastic modulus (hardness), high polarity (wet property), and high flame retardancy can be imparted to a composition.

### BEST MODE FOR CARRYING OUT THE INVENTION

The present invention is explained in detail in the following. The present invention relates to a polyolefin graft copolymer, in which an olefin monomer is graft-copolymerized to modified particles of a metallic compound in the presence of a coordination polymerization catalyst.

As the coordination polymerization catalyst used in the present invention, any catalyst can be used as long as the catalyst has olefin polymerization activity, and the catalyst preferably has the olefin polymerization activity in the co-existence with a metallic compound, particularly in the co-existence with water. Accordingly, coordination polymerization catalysts of a late transition metal complex are preferable.

### (Coordination polymerization catalysts of a late transition metal complex)

As the coordination polymerization catalysts of a late transition metal complex used in the present invention, any catalysts can be used as long as the catalyst has olefin polymerization activity in the co-existence with water, and as late transition metals, iron, cobalt, nickel, ruthenium, rhodium, palladium, osmium, iridium and platinum in the VIII to X groups in the periodic table are preferable. Amorig these, nickel, palladium and platinum in the X group are preferable, nickel and palladium are particularly preferable, and palladium is further preferable, since these transition metals are relatively stable even in water.

As a ligand in the late transition metal complex in the present invention, examples are ligands containing nitrogen, oxygen, phosphorus or sulfur, but there is no particular restriction. For example, ligands described in summaries of publications such as summaries of Chem. Rev. 2000, vol. 100, page 1169, Journal of Synthetic Organic Chemistry, Japan, 2000, vol.58, page 293, Angew. Chem. Int. Ed. 2002, vol. 41, page 544, Chem. Rev. 2003, vol. 103, page 283, and WO 97/17380, WO 97/48740, Chem. Commun. 2000, page 301, Macromol. Symp. 2000, vol. 150, page 53, Macromolecules, 2001, vol. 34, page 1165, Macromolecules, 2001, vol. 34, page 1513, and Macromolecules, 2001, vol. 34, page 2022, and Macromolecules, 2003, vol. 36, page 6711 can be used. Among these, ligands having 2 imine nitrogens, particularly, α-diimine ligands are preferable in the viewpoint of the simplicity in synthesizing.

As the coordination polymerization catalyst of a late transition metal complex in the present invention, a species having a structure of the following general formula (1) or the general formula (2) is used after reacting with a co-catalyst. An olefin monomer is coordinated and inserted into this species, and polymerization proceeds. In general, this species is called activated species. 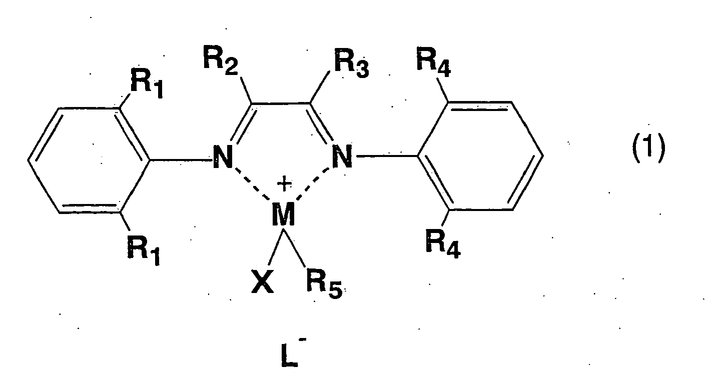 (wherein, M represents a palladium or nickel. Each of R₁ and R₄ independently represents a hydrocarbon group having 1 to 4 carbon atoms. R₂ and R₃ represent each independently a hydrogen atom or a methyl group. R₅ represents a halogen atom, hydrogen atom or organic group having 1 to 20 carbon atoms. X represents an organic group having a hetero atom coordinatable to M, and may be connected to R₅, or may not exist. L- represents anion), 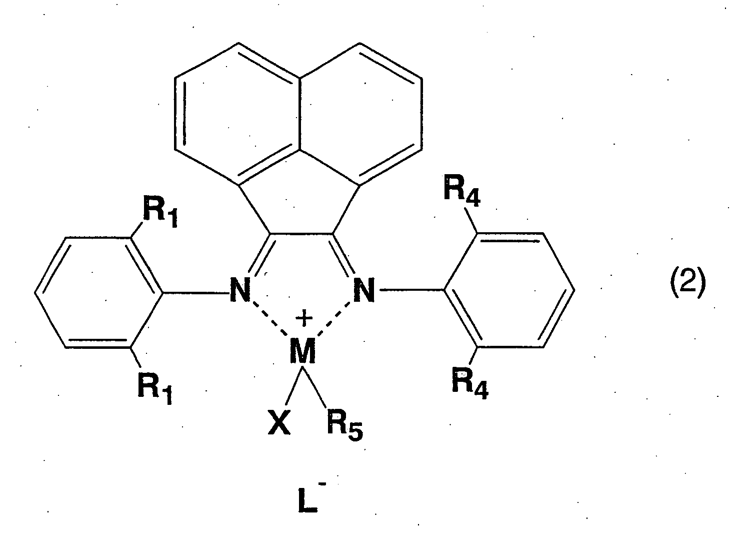 (wherein, M represents a palladium or nickel. Each of R₁ and R₄ independently represents a hydrocarbon group having 1 to 4 carbon atoms. R₅ represents a halogen atom, hydrogen atom, or an organic group having 1 to 20 carbon atoms. X represents an organic group having a hetero atom coordinatable to M, and may be connected to R₅, or may not exist. L⁻ represents anion).

As the molecule represented by X coordinatable to M, examples are polar compounds such as diethyl ether, acetone, methyl ethyl ketone, acetaldehyde, acetic acid, ethyl acetate, water, ethanol, acetonitrile, tetrahydrofuran, dimethylformamide, dimethyl sulfoxide, and propylene carbonate, but X may not exist. When R₅ has a hetero atom, particularly a carbonyl oxygen such as an ester bond, this carbonyl oxygen may be coordinated as X. It is also known that this olefin is coordinated when polymerized with an olefin.

The counter anion represented by L- is generated together with a cation (M⁺) by reacting a catalyst comprising an α-diimine ligand and a transition metal with a co-catalyst, and anion, which can form a non-coordinatable ion pair in a solvent, may be used.

The α-diimine ligand having an aromatic group in both imine nitrogens, specifically, a compound represented by ArN=C(R₂)C(R₃)=NAr is preferable since synthesis thereof is simple and the activity is high. R₂ and R₃ are preferably a hydrocarbon group, and particularly preferably a hydrogen atom, methyl group, or a compound having an acenaphtliene skeleton, represented by the general formula (2), since synthesis thereof is simple and the activity is high. Further, it is preferable to employ an α-diimine ligand having an aromatic group in both imine nitrogens from the viewpoint of being effective due to the steric factor and having tendency of increasing the molecular weight of a polymer. Therefore, Ar preferably represents an aromatic group having a substituent, and examples thereof are 2,6-dimethylphenyl, and 2,6-diisopropylphenyl.

An auxiliary ligand (R₅) in an activated species obtained from the late transition metal complex of the present invention is preferably a hydrocarbon group, halogen group or hydrogen group. While a cation (Q⁺) in a co-catalyst described later abstracts a halogen and the like from a metal-halogen bond, metal-hydrogen bond or hydrogen-carbon bond in a catalyst to form a salt, a cation (M⁺) as an activated species having a metal-carbon bond, metal-halogen bond or metal-hydrogen bond is generated from the catalyst, which is because a non-coordinatable ion pair with an anion (L-) in the co-catalyst is required to be formed. Specific examples of R₅ are a methyl group, chloro group, bromo group and hydrogen group, and particularly, a methyl group and chloro group are preferable in the viewpoint of the simplicity in synthesizing. Since insertion of an olefin into a M⁺-halogen bond does not occur easily compared with a M⁺-carbon bond (or hydrogen bond), R₅ is particularly preferably a methyl group.

Further, R₅ may be an organic group having an ester bond containing carbonyl oxygen coordinatable to M, and an example is a group obtained from methyl butyrate.

The co-catalyst can be represented by Q⁺L⁻. Examples of Q are Ag, Li, Na, K and H, and Ag is preferable since a reaction of abstracting a halogen completes easily with Ag, and Na and K are preferable since these are inexpensive. Examples of L are BF₄, B(C₆F₅)₄, B(C₆H₃(CF₃)₂)₄, PF₆, AsF₆, SbF₆, (RfSO₂)₂CH, (RfSO₂)₃C, (RfSO₂)₂N and RfSO₃. Particularly, PF₆, AsF₆, SbF₆, (RfSO₂)₂CH, (RfSO₂)₃C, (RfSO₂)₂N and RfSO₃ are preferable in the viewpoint of showing a tendency of stability for a polar compound, further, PF₆, AsF₆, SbF₆ are particularly preferable in the viewpoint of the simplicity in synthesizing and industrial availability. From the viewpoint of the high activity, BF₄, B(C₆F₅)₄ and B(C₆H₃(CF₃)₂)₄ are preferable, and B(C₆F₅)₄ and B(C₆H₃(CF₃)₂)₄ are particularly preferable. Rf represents a hydrocarbon group containing a plurality of fluorine groups. These fluorines are required for an anion to be non-coordinatable, and higher number thereof is more preferable. Examples of Rf are CF₃, C₂F₅, C₄F₉, C₈F₁₇ and C₆F₅, but not limited thereto. Some of these may be combined.

From the above-described reason of activation, the molar ratio of a catalyst in a late transition metal/co-catalyst is 1/0.1 to 1/ 10, preferably 1/0.5 to 1 / 2, particularly preferably 1/0.75 to 1/1.25.

### (Olefin monomer)

An olefin monomer used in the present invention is not particularly limited as long as the olefin has 2 to 20 carbon atoms, and examples thereof are ethylene, propylene, 1-butene, 1-hexene, 1-octene, 1-decene, 1-hexadecene, 1-eicosene, 4-methyl-1-pentene, 3-methyl-1-butene, vinylcyclohexane, cyclopentene, cyclohexene, cyclooctene, norbornene, and 5-phenyl-2-norbornene.

Of these, α-olefins having at most 10 carbon atoms are preferable in the viewpoint of the high polymerization activity, and examples are ethylene, propylene, 1-butene, 1-hexene, and 1-octene. These olefin monomers may be used alone or in combination of at least two kinds.

Also, a small amount of dienes such as 1,3-butadiene, isoprene, 1,4-hexadiene, 1,5-cyclooctadiene, norbornadiene, 5-vinyl-2-norbornene, ethylidenenorbomene, dimethanooctahydronaphthalene, and dicyclopentadiene may be used together.

The amount of the olefin monomer to be used is not limited, however, it is preferable that the molar ratio of olefin monomer/activated species (which is a smaller amount of either a catalyst or a co-catalyst) is 10 to 10⁹, further 100 to 10⁷, and particularly 1,000 to 10⁵. When the molar ratio is too small, only a polymer having small molecular weight is obtained, and when too large, the yield of a polymer based on monomers tends to become low.

### (Modified particles of metallic compound)

The metallic compound used in the present invention is not particularly limited, however, the metallic compound preferably contains at least one metal selected from the group consisting of sodium, potassium, beryllium, magnesium, calcium, strontium, barium, titanium, molybdenum, iron, zinc, aluminum, gallium, silicon, tin, lead and antimony, and the metallic compound is preferably one selected from an oxide, hydroxide, carbonate, sulfate, silicate, nitride, titanate, zirconate, borate, sulfide, carbide or boric acid. Specific examples are silica, alumina, zinc oxide, titanium oxide, calcium oxide, magnesium oxide, iron oxide, tin oxide, antimony oxide, beryllium oxide, calcium hydroxide, magnesium hydroxide, aluminum hydroxide, basic magnesium carbonate, calcium carbonate, magnesium carbonate, zinc carbonate, barium carbonate, calcium sulfate, barium sulfate, gallium sulfate, calcium silicate, aluminum nitride, boron nitride, silicon nitride, potassium titanate, barium titanate, lead zirconium titanate, aluminum borate, molybdenum sulfide, silicon carbide and zinc borate, and particularly preferable are magnesium hydroxide and silica since they can be obtained in the state of being dispersed in water.

As the metallic compound used in the present invention, clay compounds can be also used. Herein, the clay compound is referred to clay, clay mineral or ion exchangeable layer compound, and is not particularly limited. The clay is referred to an aggregate of fine silicate mineral, and the clay mineral is referred to a water-containing silicate, which constitutes the main component in clay. These may be not only natural substances but also artificial compositions. The ion exchangeable layer compound is referred to a compound having a crystal structure in which planes constituted by an ion bond etc are mutually laminated in parallel with weak bonding force and a compound in which the contained ions are exchangeable.

The clay and clay mineral also include ion exchangeable layer compounds. Specific examples are phyllosilicates (such as phyllosilicic acid and phyllosilicate) as clay mineral. Examples of the phyllosilicate are smectites (such as montmorillonite, saponite and hectolite), micas (such as illite and sericite), and vermiculites, and these may form a mixed layer. Fluorine tetra-silicon mica, raponite, smectone and the like are also other examples.

Ion exchangeable layer compounds which are not clay mineral, such as α-Zr(HPO₄)₂, γ-Zr(HPO₄)₂, α=Ti(HPO₄)2, γ-Ti(HPO₄)₂ and the like, are also exemplified.

Examples of the ion exchangeable layer compounds which are not clay mineral are bentonite, *kibushi* clay, gairome clay, sepiolite; parigolskite, allophane, and imogolite. Those which are clay minerals and ion exchangeable layer compounds at the same time are preferable, and montmorillonite is particularly preferable.

The shape of a metallic compound used in the present invention is not particularly limited, but a spherical form is preferable. The size of particles is also not particularly limited. In the case of silica which is a preferable example for the present invention, the average particle size is 5 to 1,000 nm, and preferably 30 to 150 nm. In the case of magnesium hydroxide, the average particle size is 50 to 10,000 nm, preferably 300 to 1,500 nm. These particles in the state of being dispersed in water may be prepared, or prepared particles may be dispersed in water.

In the case of silica, colloidal silica is preferable, and the colloidal silica can be used with preparing with the sol-gel method, however a commercially available product such as any grades of SNOWTEX available from Nissan Chemical Industries, Ltd may be used.

Though the main component of colloidal silica is silicon dioxide, but alumina, sodium aluminate and the like may be contained as a small-amount component, further, inorganic bases such as sodium hydroxide, potassium hydroxide, lithium hydroxide and ammonia, and organic bases such as tetramethylammonium may be also contained as a stabilizer.

The modified particles mentioned in the present invention indicates particles in which a coordination-polymerizable active point is introduced into particles of the above-described metallic compound. Specifically, a compound having a functional group capable of reacting with the metallic compound and a coordination-polymerizable carbon-carbon double bond in the molecule (hereinafter, referred to as compound (A)) can be reacted with particles of the metallic compound, thereby the coordination-polymerizable carbon-carbon double bond can be introduced. This coordination-polymerizable carbon-carbon double bond is a component for enabling graft copolymerization of the modified particles of the metallic compound with an olefin monomer. The coordination-polymerizable carbon-carbon double bond is preferably a carbon-carbon double bond having allyl end (α-olefin structure), cyclic olefin end, styryl end or (meth)acryl end, and particularly, a coordination-polymerizable carbon-carbon double bonds having (meth)acryl end and allyl end are preferable since they are easily coordination-polymerized, namely, easily graft-copolymerized with an olefin monomer.

In the case of magnesium hydroxide which is a preferable example in the present invention, the compound (A) is preferably an acid, particularly, a carboxylic acid. Specific examples are acrylic acid, vinyl acetic acid, 4-pentenoic acid, 2,2-dimethyl-4-pentenoic acid, undecylenoic acid and 5-norbornene-2,3-dicarboxylic acid, and particularly preferable are acrylic acid, vinyl acetic acid, 4-pentenoic acid and undecylenoic acid.

In the case of silica which is a preferable example in the present invention, it is preferable to use a hydrolysable alkoxy group or silanol group bonded to a silicon atom, or a group having a cyclic siloxane structure as the group to be reacted with silanol in silica. Specific examples of the compound (A) are alkoxysilane compounds such as 3-acryloxypropylmethyldimethoxysilane, 3-acryloxypropyltrimethoxysilane, 3-acryloxypropylmethyldiethoxysilane, and 3-acryloxypropyltriethoxysilane, and organosiloxanes such as 1,3,5,7-tetrakis(acryloxypropyl)-1,3,5,7-tetramethylcyclotetrasiloxane, and 1,3,5-tris(acryloxypropyl)-1,3,5-trimethylcyclotrisiloxane, and of these, 3-acryloxypropylmethyldimethoxysilane is particularly preferable since reactivity thereof is excellent. These compounds (A) may be used alone or in combination of at least two kinds:

In the case of clay compound which is a preferable example in the present invention, the functional group capable of reacting with a clay compound is preferably an onium ion, and examples are an ammonium ion and phosphonium ion are mentioned, and an ammonium ion is preferable. Specific examples of the compound (A) are not limited, but examples are compounds represented by the following formulae:

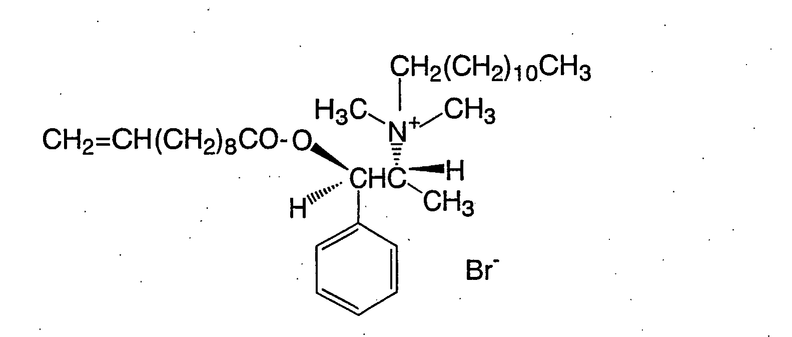

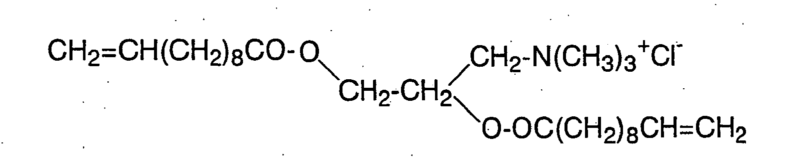

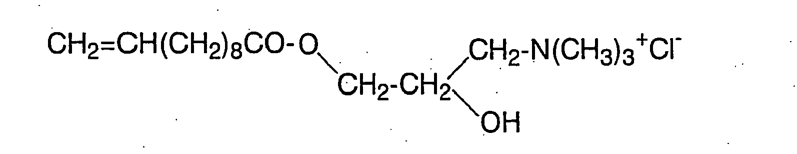

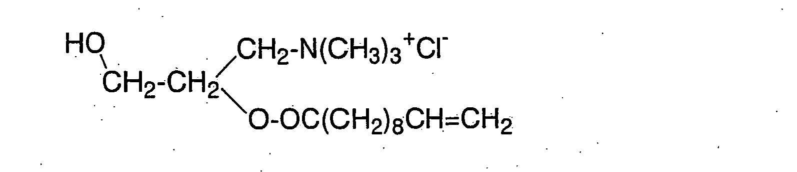

These compounds (A) may be used alone or in combination of at least two kinds.

The reaction of the compound (A) may be conducted at any pH under the condition that the compound (A) in the state of being dispersed in water is not gelled and, if necessary, the reaction system may be heated, and auxiliary solvents such as methanol, ethanol, isopropanol, and acetone may be also added.

In reacting the compound (A) and in subsequently polymerizing thereof, it is advantageous that a dispersion stabilizer is existed for preventing coagulation. It is desirable that the amount of the dispersion stabilizer to be used is at least an amount to maintain dispersion stability, and at most a concentration for micelle formation in a solvent (at the polymerization initiation).

The dispersion stabilizer preferably used in the present invention is an anionic surfactant and/or polymer dispersion stabilizer.

As the anionic surfactants which can be used in the present invention, examples are an alkali metal salt of higher fatty acid (soaps) such as sodium laurate, sodium stearate and sodium oleate, sodium salt of higher alcohol sulfate ester such as sodium salt of lauryl sulfate ester and sodium salt of cetyl sulfate ester, lauryl alcohol, salt of higher alkyl ether sulfate ester such as sulfate ester salt of ethylene oxide adducts, sulfated oil, sulfated fatty acid ester, sulfated fatty acid, sulfated olefin, sodium salt of alkylbenzenesulfonate such as sodium dodecylbenzenesulfoante, salt of alkylarylsulfonate, salt of formalin condensed naphthalenesulfonate, salt of α-olefinsulfonate, alkyl(N-methyl)taurides such as oleyl(N-methyl)tauride, sulfosuccinic diester surfactants such as sodium di-2-ethylhexyl sulfosuccinate ester, disodium salt of higher alcohol phosphate monoester, mono-sodium salt of higher alcohol phosphate diester, phosphate ester salt of higher alcohol ethylene oxide adducts, and zinc dialkyldithiophosphate. In the present invention, a polymer dispersion stabilizer may be used or used together as a dispersion stabilizer.

The composition ratio of a compound (A) to a metallic compound is preferably 0.01 to 50 parts by weight based on 100 parts by weight of the metallic compound, more preferably 0.1 to 10 parts by weight, and particularly preferably 0.5 to 5 parts by weight.

### (Graft copolymer of modified particle of a metallic compound with an olefin monomer)

A graft copolymer of modified particles of a metallic compound with an olefin monomer in the present invention is obtained by reacting a compound (A) with particles of a metallic compound in the state of being dispersed in water, under the aqueous medium in the presence of a dispersion stabilizer, then, graft-copolymerizing an olefin monomer in the presence of a coordination polymerization catalyst of a late transition metal complex.

The modified particles of a metallic compound in the present invention may be used directly in a reaction with an olefin monomer, or may be used after dilution, concentration, thermal treatment, and aging treatment and the like, if necessary, or may be used after adjusting components by adding additives such as an emulsifier, an antifreezing agent, a stabilizer, and a pH adjuster.

The particles of a metallic compound are used in the form of latex preferably having a solid content of 1 to 50 % by weight, and more preferably having a solid content of 2 to 40 % by weight, particularly preferably having a solid content of 5 to 30 % by weight. When the solid content is too large, coagulation of latex particles occurs, thus, the reaction tends to be nonuniform, and when too small, the amount of the whole reaction solution increases, thus the efficiency becomes poor.

Polymerization of an polyolefin graft copolymer in the present invention is carried out in an emulsification system or a system similar to the emulsification system. For example, a coordination polymerization catalyst and an olefin monomer can be uniformly dispersed in a latex of modified particles of a metallic compound (hereinafter, referred to as modified particles) to be reacted. When the olefin monomer to be used is a gas at the reaction temperature, after charging the olefin monomer, which is condensed or coagulated at a low temperature to be converted into a liquid or solid, the system may be heated up to the reaction temperature, alternatively, the system may be charged with the polyolefin monomer, which is converted into liquid or gas by pressurizing. The modified particles, olefin monomer and coordination polymerization catalyst may be charged into a reaction vessel in the whole amount at a time, or part of them may be charged, thereafter the remaining amount is continuously or intermittently added. They may be charged either with water or an emulsifier to be in the state of an emulsion.

The ratio to be used between modified particles and an olefin monomer can be arbitrary set, however, it is preferable to use an olefin monomer in an amount of 1 to 100 parts by weight, further preferable to use 5 to 50 parts by weight, particularly preferable to use 10 to 40 parts by weight based on 100 parts by weight of the modified particles to be used. Particularly, when the olefin monomer is a volatile liquid or a gas having a boiling point of at most 100°C, it is possible that the olefin monomer is used in a largely excessive amount, the reaction is terminated when the above-mentioned preferable amount is polymerized, and remove unreacted monomers by heating or releasing pressure.

In the polymerization, an organic solvent may be added in a small amount in order to promote the reaction of an olefin monomer and a coordination polymerization catalyst. The solvent is not particularly limited, but aliphatic or aromatic solvents are preferable, and these may be halogenated. Examples thereof are toluene, ethylbenzene, xylene, chlorobenzene, dichlorobenzene, pentane, hexane, heptane; octane, cyclohexane, methylcyclohexane, ethylcyclohexane, butyl chloride, methylene chloride and chloroform. The solvent may also be a polar solvent such as tetrahydrofuran, dioxane, diethyl ether, acetone, ethanol, methanol, methyl ethyl ketone, methyl isobutyl ketone, and ethyl acetate. Solvents having relatively low water-solubility and in which a catalyst is easily dissolved are particularly preferable, and examples of such particularly preferable solvents are methylene chloride, chloroform, butyl chloride and chlorobenzene:

These solvents may be used alone or in combination of at least two. The total amount of solvents to be used is preferably at most 30 % by volume, and more preferably 10 % by volume based on the volume of the whole reaction solution. Alternatively, the amount is preferably at most 150 parts by weight, and more preferably at most 50 parts by weigh based on 100 parts by weight of modified particles to be used. When the amount of solvent to be used is at most 30 % by volume based on the volume of the whole reaction solution or at most 150 parts by weight based on 100 parts by weight of the modified particles, it is preferable since latex particles are stable and a uniform reaction can be confirmed.

The polyolefin graft copolymer of the present invention is prepared at -30 to 200°C, and preferably 0 to 100°C. The polymerization time is not particularly limited, but it is usually from 10 minutes to 100 hours, and the reaction pressure is not particularly limited, but it is from a normal pressure to 10 MPa. The temperature and pressure may be constantly maintained at the same levels from the initiation of the reaction to termination thereof, or may be changed continuously or gradually during the reaction. When the olefin monomer to be used is a gas such as ethylene and propylene, the pressure may decrease gradually along with consumption of monomers by the polymerization reaction, and the reaction may be conducted while allowing the change of pressure as it is, or the reaction may be conducted while constantly keeping the pressure at the same level by supplying monomers or heating and the like.

In some cases, the polyolefin graft copolymer contains a free polyolefin which is not grafted, however, it is preferable that a free polyolefin is not substantially contained, which can be attained by adjustment of various polymerization conditions. For example, the amount of a free polyolefin can be reduced by increasing the amount of a coordination-polymerizable carbon-carbon double bond in the above-mentioned modified particles, or adding a solvent in polymerizing an olefin monomer.

The polyolefin graft copolymer of the present invention is obtained usually in the form of a latex. The particle size of the latex is determined according to the particle size of modified particles which is used and the amount of an olefin monomer which is reacted. Depending on the reaction conditions, a part of latex particles coagulate and precipitate or a free polyolefin is by-produced to be precipitated in some cases, however, the reaction is preferably conducted under conditions without such precipitates.

The polyolefin graft copolymer or a latex containing the same, which are obtained as the above description, can be recovered in the powder form, resin block or rubber block comprising a polyolefin graft copolymer by, for example, spray-drying the latex, or coagulating with an electrolyte such as calcium chloride, magnesium chloride, calcium sulfate, magnesium sulfate, aluminum sulfate, and calcium formate, or after through such precipitation processes, performing treatments such as washing, dehydration (solvent removal) and drying. A dried product of the graft copolymer of the present invention can be recovered by processing into pellets using an extruder or a Banbury mixer and the like, or processing into pellets by which a resin under the conditions of containing water (containing solvent) obtained via from precipitation to dehydration (solvent removal) is passed through a squeeze dehydrator.

### (Resin composition)

The resin composition of the present invention can be prepared by mixing the graft copolymer of the present invention into a polyolefin resin.

The polyolefin graft copolymer of the present invention shows excellent dispersibility also for a polyolefin resin having low polarity due to containing a polyolefin component. In the case of silica as a particularly preferable example, various functions such as, particularly, rigidity, friction resistance, heat resistance, dimension stability, electrical property, and polarity can be imparted due to containing its component. In the case of magnesium hydroxide which is likewise a particularly preferable example, various functions such as, particularly, rigidity, friction resistance, heat resistance, dimension stability, flame retardancy, and polarity can be imparted due to containing its component.

Examples of the polyolefin resin are polypropylene, polyethylene, ethylene propylene rubber, ethylene propylene diene rubber, ethylene octene rubber, polymethylpentene, ethylene cyclic olefin copolymer, ethylene-vinyl acetate copolymer, ethylene glycidyl methacrylate copolymer, and ethylene methyl methacrylate copolymer. Of these, polyethylene and polypropylene are more preferable, and propylene is particularly preferable since the polyolefin graft copolymer of the present invention shows excellent dispersibility into these.

The composition ratio between a polyolefin resin and a polyolefin graft copolymer may be appropriately determined so that physical properties of the molded article are obtained in good balance, and in order to obtain sufficient physical properties, the amount of a polyolefin graft copolymer is at least 0.1 part, preferably at least 5 parts based on 100 parts of the polyolefin resin, and in order to maintain the property of a polyolefin resin, the amount of the polyolefin graft copolymer is at most 500 parts, preferably at most 100 parts, and further preferably at most 50 parts based on 100 parts of the polyolefin resin.

The graft copolymer of the present invention can be also compounded in various thermoplastic resins or thermosetting resins, and further in addition to the above-mentioned polyolefins, these resins can be also mixed.

As the above-mentioned thermoplastic resin, generally used resins such as vinyl polymers such as polyvinyl chloride, polystyrene, polymethyl methacrylate, a methyl methacrylate-styrene copolymer, a styrene-acrylonitrile copolymer, a styrene-acrylonitrile-N-phenylmaleimide copolymer, and an α-methylstyrene-acrylonitrile copolymer, and engineering plastics such as polyester, polycarbonate, polyamide, polyphenylene ether-polystyrene composite, polyacetal, polyether ether ketone, and polyether sulfone are preferably exemplified, in addition to polyolefin resins. As the above-mentioned thermosetting resin, generally used resins such as phenol resins, urea resins, melamine resins, unsaturated polyester resins, and epoxy resins are preferably exemplified. These thermoplastic resins and thermosetting resins may be used alone or in combination of at least two kinds.

The composition ratio between a thermoplastic resin or thermosetting resin' and a polyolefin graft copolymer may be appropriately determined so that physical properties of the molded article are obtained in good balance, and in order to obtain sufficient physical properties, the amount of a polyolefin graft copolymer is at least 0.1 part, and preferably at least 5 parts based on 100 parts of a thermoplastic resin or thermosetting resin, and in order to maintain the propertes of a thermoplastic resin or thermosetting resin, the amount of a polyolefin graft copolymer is at most 500 parts, preferably at most 100 parts, more preferably at most 50 parts based on 100 parts of a thermoplastic resin or thermosetting resin.

Further, the composition comprising the polyolefin graft copolymer of the present invention can contain general additives known in the plastic and rubber industries, for example, compounding agents such as a plasticizer, a stabilizer, a lubricant, an ultraviolet ray absorber, an antioxidant, a flame retardant, a flame retardant aid, a pigment, glass fibers, a filler, and a polymer processing aid.

As the process for obtaining the polyolefin graft copolymer composition of the present invention, a process usually used for compounding a thermoplastic resin can be used, and for example, the polyolefin graft copolymer composition of the present invention is prepared by melt-kneading a thermoplastic resin, the polyolefin graft copolymer of the present invention, and if required, additive components using heating kneaders such as a single screw extruder, a twin screw extruder, a roll, a Banbury mixer, a Brabender, a kneader, high shearing mixer. The kneading order of respective components is not particularly limited, and can be determined depending on apparatuses to be used, workability or physical properties of the thermoplastic resin composition to be obtained.

When the thermoplastic resin is prepared by emulsion polymerization, a copolymer of the thermoplastic resin and the polyolefin graft copolymer can be blended both in the form of latex (emulsion), thereafter, co-precipitated (co-coagulated) to obtain a composition.

Examples of the process of molding thus obtained polyolefin graft copolymer composition are molding processes usually used for molding a thermoplastic resin composition, such as an injection molding, an extrusion molding, a blow molding, and a calender molding.

### EXAMPLES

The present invention is explained in detail based on the following examples, but the present invention is not limited thereto.

In the following synthesis examples, examples and comparative examples, physical properties and characteristics were respectively measured according to the following process.

### [Average particle size]

The particle size of a latex was measure by a dynamic light scattering process using Submicron Particle Sizer Model 370 manufactured by NICOMP, and the volume-average particle size was calculated.

### [¹H NMR spectrum]

About 10 mg of a sample was dissolved in about 0.7 mL of deuterated chloroform (manufactured by Aldrich), and the ¹H NMR spectrum was measured by a 300 MHz NMR apparatus (Gemini 300, manufactured by Varian).

### [Tensile elastic modulus, tensile elongation]

A press sheet having a thickness of about 0.7 mm made of a polypropylene resin or the resin composition of the present invention was prepared, and No. 2(1/3) small test pieces described in JIS-K7113, appendix 1 were punched out from the sheet. Using an autograph (AUTOGRAPH AG-2000A, manufactured by Shimadzu Corp.), the tensile property was measured at n=3. The tensile elastic modulus was measured at an initial speed of 1 mm/min, then, pulled up to 30 %, next, pulled up to 40 % at a speed of 5 mm/min, and finally, the tensile speed was raised up to 16.66 mm/min, and the elongation ratio at break was measured.

### [Wetting property]

Using a press sheet having a thickness of about 0.7 mm made of a polypropylene resin or the resin composition of the present invention, the surface tension was measured according to JIS-K 6768. The surface tension was measured at 6 points on one test piece, and the average value thereof was adopted as an index of wetting property. Higher surface tension and wetting property represent higher polarity.

### [Flame retardancy]

A sample having a width of 6.5 mm and a length of 80 mm was cut out from a press sheet having a thickness of about 3 mm made of the resin composition of the present invention, and the oxygen index was measured using the sample according to JIS-K 7201.

### SYNTHESIS EXAMPLE 1

### (Synthesis of coordination polymerization catalyst and preparation of catalyst active species)

A coordination polymerization catalyst (hereinafter, referred to as [N^N]PdMeCl) having a structure represented by the following chemical formula (3): 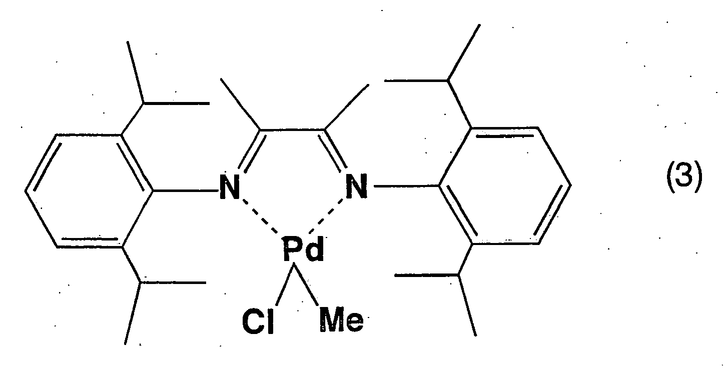 was synthesized by a known process described in a reference such as J. Am. Chem. Soc. 1995, vol. 117, page 6414. [N^N]PdMeCl and LiB(C₆F₅)₄ (available from STREM Chemical Inc.) were stirred in a dried diethyl ether (available from Wako Pure Chemical Industries, Ltd.) at a room temperature for one week to precipitate LiCl, and a [N^N]PdMe⁺•B(C₆F₅)₄⁻ complex (catalyst active species) was prepared. Thereafter, the dryed diethyl ether was concentrated and exchanged by dryed methylene chloride (available from Wako Pure Chemical Industries, Ltd.) (concentration: 40 mmol/L).

### EXAMPLE 1

### (Synthesis of silica modified particle and synthesis of graft copolymer of silica modified particle and olefin monomer)

A 100 mL pear-shaped flask was charged with 12.5 mL of distilled water (available from Wako Pure Chemical Industries, Ltd.), and 81 mg of sodium dodecylsulfate (sodium laurylsulfate, available from Wako Pure Chemical Industries, Ltd.) was dissolved thereinto. Next, 12.5 mL of colloidal silica (SNOWTEX ZL available from Nissan Chemical Industries, Ltd., specific gravity: 1.296, SiO₂ amount: 40.6 %, average particle size: 115 nm) (6.58 g in terms of colloidal silica) was dropped while stirring. A 1N sulfuric acid aqueous solution was added thereto in a small amount to adjust pH at about 7. Deaeration under reduced pressure was effected by an aspirator, and nitrogen substitution was conducted. A temperature in an oil bath was set at 75 to 80°C, thereto was added 0.15 g of 3-acryloxypropyltrimethoxysilane (available from Shin-Etsu Silicone Co., Ltd.), and the mixture was stirred for 4 hours and left to cool to a room temperature.

Further, 3 mL (2.0 g) of 1-hexene (available from Wako Pure Chemical Industries, Ltd.) was added, and an ultrasonic wave was applied for 1 minute by an ultrasonic wave washing machine (UT-204, manufactured by SHARP CORPORATION). Subsequently, 0.5 mL (20 µmol) of the catalyst active species solution obtained in Synthesis Example 1 was added, and an ultrasonic wave was applied for 1 minute in the same manner. The mixture was stirred at a room temperature for 10 hours. The average particle size was 107 nm (partially, 377 nm).

Partial precipitation was observed, and a calcium chloride aqueous solution was added to a latex component in this precipitate to cause precipitation, and the mixture was filtrated using a kiriyama funnel and washed with water. After drying under reduced pressure, a polyolefin graft copolymer of the present invention was obtained. It was confirmed that polyhexene was present in the polyolefin graft copolymer and its hexane insoluble component from the ¹H NMR observation.

### EXAMPLE 2

### (Property of polypropylene resin composition)

20 g of a polypropylene resin (F232DC, available from Gland Polymer) and 4 g of the polyolefin graft copolymer obtained in Example 1 were kneaded by using a Laboplastomill (manufactured by Toyo Seiki Seisaku-sho, Ltd., capacity: 30 cc) at 200°C and 100 rpm for 10 minutes, then, the obtained resin composition was pressed (conditions: 200°C, no pressure, 10 min → 200°C, 50 kgf/cm², 10 min → room temperature, 50 kgf/cm² , 5 min) to form a sheet having a thickness of about 0.7 mm, and the tensile property and wetting property were measured. The results are shown in Table 1.

### COMPARATIVE EXAMPLE 1

### (Property of only polypropylene resin)

The tensile property and wetting property of only a polypropoylerie resin were measured in the same manner as Example 2. It is revealed that high elastic modulus and high wetting property are obtained in Example 2. The results are shown in Table 1.

### COMPARATIVE EXAMPLE 2

### (Property of composition of polypropylene resin and silica)

A calcium chloride aqueous solution was added to the same colloidal silica as used in Example 1 to cause precipitation, and the mixture was filtrated using a kiriyama funnel and washed with water. After drying under reduced pressure, silica was obtained.

20 g of a polypropylene resin and 4 g of the resultant silica were kneaded by using a Laboplastomill at 200°C and 100 rpm for 10 minutes, then, the resultant resin composition was pressed to form a sheet having a thickness of about 0.7 mm, and the tensile property and wetting property were measured. The results are shown in Table 1. It is revealed that higher elongation is obtained in Example 2.

### EXAMPLE 3

### (Synthesis of silica modified particle and synthesis of graft copolymer of silica modified particle and olefin monomer)

A 500 mL separable flask was charged with 310.7 mL of distilled water (available from Wako Pure Chemical Industries, Ltd.), and 499 mg of sodium di-2-ethylhexylsulfosuccinate (Rapisol A-80 available from NOF Corporation.) was dissolved thereinto. Next, 76 mL, 98.5 g, of colloidal silica (SNOWTEX ZL available from Nissan Chemical Industries, Ltd.) (40 g in terms of colloidal silica) was dropped while stirring. A 2N sulfuric acid aqueous solution was added in a small amount to adjust pH in the system at about 7. Deaeration under reduced pressure was effected by an aspirator, and nitrogen substitution was conducted. The temperature in an oil bath was set at 75 to 80°C, and 1 g of 3-acryloxypropyltrimethoxysilane (available from Shin-Etsu Silicone Co., Ltd.) was added, the mixture was stirred for 4 hours and left to cool to a room temperature.

Further, 1 g of sodium dodecylsulfate (sodium laurylsulfate available from Wako Pure Chemical Industries, Ltd.) was added to 50 ml (about 5.2 g, in terms of colloidal silica) of the obtained silica modified particles, and deaeration under reduced pressure was effected by an aspirator, and nitrogen substitution was conducted. Thereto were added 1 mL of dried methylene chloride (available from Wako Pure Chemical Industries, Ltd.) and 1.0 mL (about 40 µmol) of the catalyst active species solution obtained in Synthesis Example 1, and an ultrasonic wave was applied for 5 minutes by an ultrasonic wave washing machine (UT-204 manufactured by SHARAP CORPORATION). Subsequently, 6 mL (2.0 g) of 1-hexene (available from Wako Pure Chemical Industries, Ltd.) was added and the mixture was stirred at a room temperature for 7 hours. The average particle size was 154 nm.

Partial precipitation was observed, and a calcium chloride aqueous solution was added to a latex component of this precipitate to cause precipitation, and the mixture was filtrated using a kiriyama funnel and washed with water. After drying under reduced pressure, a polyolefin graft copolymer of the present invention was obtained. It was confirmed that polyhexene was present in the polyolefin graft copolymer from the ¹H NMR observation.

### EXAMPLE 4

### (Property of polypropylene resin composition)

20 g of a polypropylene resin (F232DC available from Gland Polymer) and 4 g of the polyolefin graft copolymer obtained in Example 3 were kneaded by using a Laboplastomill (manufactured by Toyo Seiki Seisaku-sho, Ltd., capacity: 30 cc) at 200°C and 100 rpm for 10 minutes, then, the obtained resin composition was pressed to form a sheet having a thickness of about 0.7 mm, and the tensile property and wetting property were measured. The results are shown in Table 1. It is revealed that higher elongation is obtained as compared that in Example 2.

### EXAMPLE 5

### (Synthesis of magnesium hydroxide modified particle and synthesis of graft copolymer of magnesium hydroxide modified particle and olefin monomer).

A 500 mL separable flask equipped with a reflux condenser, a three-way cock, a thermometer and a mechanical stirrer was charged with 347.7 mL of distilled water (available from Wako Pure Chemical Industries, Ltd.), 499 mg of sodium di-2-ethylhexylsulfosuccinate (Rapisol. A-80 available from NOF CORPORATION) and 39.9 g of magnesium hydroxide (available from Kyowa Chemical Industry Co., Ltd.) and the mixture was stirred to suspend. 1.00 g of acrylic acid (available from Wako Pure Chemical Industries, Ltd.) was added under the nitrogen flow, and after heating at 70°C for 3 hours, the mixture was left to cool to a room temperature.

1 g of sodium dodecylsulfate (sodium laurylsulfate, available from Wako Pure Chemical Industries, Ltd.) was added to 50 ml (about 5.1 g, in terms of magnesium hydroxide) of the obtained magnesium hydroxide particles modified with acrylic acid, and deaeration under reduced pressure was effected by an aspirator, and nitrogen substitution was conducted. 1.0 mL (about 40 µmol) of the catalyst active species solution obtained in Synthesis Example 1 was added, and an ultrasonic wave was applied for 5 minutes by an ultrasonic wave washing machine (UT-204 manufactured by Sharp Corporation). Subsequently, 2 mL (2.0 g) of 1-hexene (available from Wako Pure Chemical Industries, Ltd.) was added and the mixture was stirred at a room temperature for 7 hours. The average particle size was 3,900 nm.

The mixture was filtrated using a kiriyama funnel and washed with water. After drying under reduced pressure, the polyolefin graft copolymer of the present invention was obtained. It is confirmed that polyhexene was present in the polyolefin graft copolymer and its hexane insoluble component from the IR observation

### EXAMPLE 6

### (Property of polypropylene resin composition)

20 g of a polypropylene resin (F232DC available from Gland Polymer) and 4 g of the polyolefin graft copolymer obtained in Example 5 were kneaded by using a Laboplastomill (manufactured by Toyo Seiki Seisaku-sho, Ltd., capacity: 30 cc) at 200°C and 100 rpm for 10 minutes, then, the obtained resin composition was pressed to form a sheet having a thickness of about 0.7 mm, and the tensile property was measured. The results are shown in Table 1.

### COMPARATIVE EXAMPLE 3

### (Property of composition of polypropylene resin and magnesium hydroxide)

20 g of a polypropylene resin and 4 g of magnesium hydroxide which is the raw material used in Example 5 were kneaded by using a Laboplastomill at 200°C and 100 rpm for 10 minutes, then, the obtained resin composition was pressed to form a sheet having a thickness of about 0.7 mm, and the tensile property was measured. It is revealed that higher elongation is obtained in Example 6. The results are shown in Table 1.

**TABLE 1**

| | Sample | Tensile property | | | Wetting property |
|---|---|---|---|---|---|
| | Composition | Stress at maximum point /MPa | Strain at maximum point /% | Elastic modulus /MPa | µN/cm |
| Com. Ex. 1 | PP 100 parts | 35 | 730 | 543 | <300 |
| Com. Ex. 2 | PP 100 parts/ SiO₂ 20 parts | 10 | 11 | 757 | 323 |
| Com. Ex. 3 | PP 100 parts/ Mg(OH)₂ 20 parts | 20 | 419 | 670 | |
| Ex.2 | PP 100 parts/ SiO₂-polyhexene copolymer (Example 1) 20 parts | 21 | 488 | 692 | 323 |
| Ex. 4 | PP 100 parts/ SiO₂-polyhexene copolymer (Example 3) 20 parts | 28 | 748 | 368 | 310 |
| Ex. 6 | PP 100 parts/ Mg(OH)₂-polyhexene copolymer (Example 5) 20 parts | 32 | 721 | 585 | |

### EXAMPLE 7

### (Flame retardancy of polypropylene resin composition)

22.5 g of a polypropylene resin and 22.5 g of the polyolefin graft copolymer obtained in the same manner as in Example 5 were kneaded by using a Laboplastomill (manufactured by Toyo Seiki Seisaku-sho, Ltd., capacity: 60 cc) at 200°C and 100 rpm for 10 minutes, then, the obtained resin composition was pressed to form a sheet having a thickness of about 3 mm, and the flame retardancy was measured. The oxygen index was 24, which shows high flame retardancy.

### SYNTHESIS EXAMPLE 2

### (Compound (A): synthesis of allyl group-containing ammonium salt)

0.165 ml of trifluoroacetic anhydride (available from Wako Pure Chemical Industries, Ltd.) was added to a mixture of 0.5 g of (-)-N-dodecyl-N-methylephedrinium bromide (CAS. No. 31351-20-9 available from Aldrich) and 0.215 g of undecylenic acid (available from Wako Pure Chemical Industries, Ltd.) under a nitrogen atmosphere, and after stirring the mixture at 30°C for 4 hours, the mixture was concentrated under reduced pressure.

According to FT-IR, a peak of an ester bond was newly found at 1746.5 cm⁻¹, and it was confirmed that a reaction of a hydroxyl group in (-)-N-dodecyl-N-methylephedrinium bromide with undecylenic acid was progressed, and the following structure was recognized.

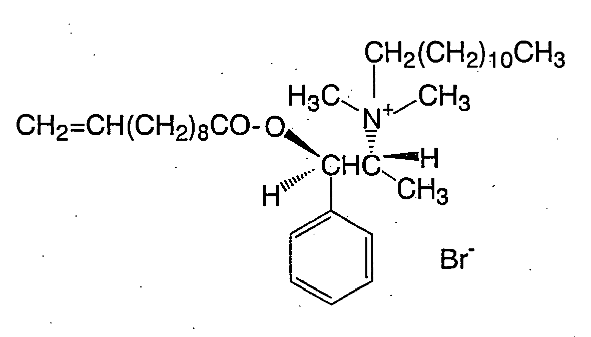

### EXAMPLE 8

### (Synthesis of clay modified product, and synthesis of graft copolymer of clay modified product and olefin monomer)

A 100 mL pear-shaped flask was charged with a dispersing solution of 72 g of distilled water (available from Wako Pure Chemical Industries, Ltd.) and 1.08 g of clay (Kunipia F available from Kunimine Kogyo K.K.) under a nitrogen atmosphere, thereto was dropped a solution of 78 mg of the allyl group-containing ammonium salt synthesized in Synthesis Example 2 and 2 g of water, and a clay modified article was synthesized.

0.25 ml (10 µmol) of a methylene chloride solution of the catalyst active species obtained in Synthesis Example 1 was dropped and dispersed.

The above-described dispersing solution was charged in a 300 ml autoclave under a nitrogen atmosphere, and ethylene having 3 MPa was introduced and reacted at a room temperature for 21 hours.

As the result of observing a TEM photograph of obtained precipitate (1.47 g), a large amount of clay was dispersed in the polymer with a single layer.

### INDUSTRIAL APPLICABILITY

The polyolefin graft copolymer of the present invention can be kneaded in a polyolefin resin and utilized as a polyolefin composite. This polyolefin composite has characteristics such as high tensile elongation, high tensile elastic modulus (hardness), high polarity (wetting property) and high flame retardancy, and the polyolefin composite is industrially useful as a polyolefin engineering plastic, polar polyolefin or flame retardant polyolefin.

## Claims

1. A polyolefin graft copolymer, wherein an olefin monomer is graft-copolymerized to modified particles of a metallic compound in the presence of a coordination polymerization catalyst.

2. The polyolefin graft copolymer of Claim 1, wherein said coordination polymerization catalyst is a coordination polymerization catalyst of a late transition metal complex.

3. The polyolefin graft copolymer of Claim 2, wherein said coordination polymerization catalyst of a late transition metal complex is a complex comprising a ligand having 2 imine nitrogens and a transition metal selected from the VIII to X group of elements in the periodic table.

4. The polyolefin graft copolymer of Claim 3, wherein said coordination polymerization catalyst of a late transition metal complex is a complex comprising an α-diimine ligand and a transition metal selected from the X group of elements in the periodic table.

5. The polyolefin graft copolymer of Claim 4, wherein said coordination polymerization catalyst of a late transition metal complex is an activated species represented by the following general formula (1) or general formula (2), 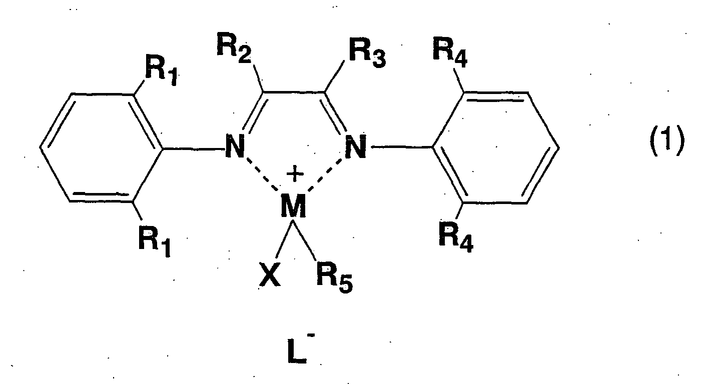 (wherein, M represents a palladium or nickel. Each of R₁ and R₄ independently represents a hydrocarbon group having 1 to 4 carbon atoms. R₂ and R₃ represent each independently a hydrogen atom or a methyl group. R₅ represents a halogen atom, a hydrogen atom or an organic group having 1 to 20 carbon atoms. X represents an organic group having a hetero atom coordinatable to M, and may be connected to R₅, or may not exist. L- represents anion), 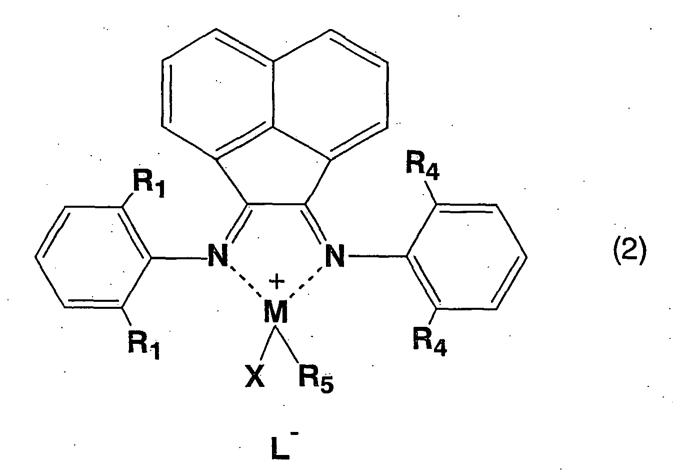 (wherein, M represents a palladium or nickel. Each of R₁ and R₄ independently represents a hydrocarbon group having 1 to 4 carbon atoms. R₅ represents a halogen atom, hydrogen atom, or an organic group having 1 to 20 carbon atoms. X represents an organic group having a hetero atom coordinatable to M, and may be connected to R₅, or may not exist. L-represents anion), after reacting with a co-catalyst.

6. The polyolefin graft copolymer of any one of Claims 1 to 5, wherein said olefin monomer is an α-olefin having at most 10 carbon atoms.

7. The polyolefin graft copolymer of any one of Claims 1 to 6, wherein said metallic compound comprises at least one metal selected from the group consisting of sodium, potassium, beryllium, magnesium, calcium, strontium, barium, titanium, molybdenum, iron, zinc, aluminum, gallium, silicon, tin, lead, and antimony.

8. The polyolefin graft copolymer of Claim 7, wherein said metallic compound is any one selected from an oxide, a hydroxide, a carbonate, a sulfate, a silicate, a nitride, a titanate, a zirconate, a borate, a sulfide, a carbide, and a borate.

9. The polyolefin graft copolymer of Claim 8, wherein said metallic compound is magnesium hydroxide or silica.

10. The polyolefin graft copolymer of any one of Claims 1 to 6, wherein said metallic compound is a clay compound.

11. The polyolefin graft copolymer of any one of Claims 1 to 10, wherein modified particles of the metallic compound is modified particles obtained by reacting a metallic compound and a compound having a functional group, and said compound having a functional group is a compound having a functional group capable of reacting with a metallic compound in the state of being dispersed in water and a carbon-carbon double bond capable of coordination polymerization in one molecule.

12. A polyolefin resin composition comprising the polyolefin graft copolymer of any one of Claims 1 to 11 and a polyolefin resin.

13. A process for preparing the polyolefin graft copolymer of any one of Claims 1 to 11.
